# EUROPÄISCHE PATENTANMELDUNG

(11) **EP 0 736 335 A2**
(43) Veröffentlichungstag der Anmeldung: **09.10.1996**
(21) Anmeldenummer: 96105503.5
(22) Anmeldetag: 06.04.1996
(51) Int. Cl.: B06B 1/04

(54) **Vibrationsgerät**

(30) Priorität: 07.04.1995 DE 19513101
(71) Anmelder: Licentia Patent-Verwaltungs-GmbH, 60596 Frankfurt (DE)
(72) Erfinder: Sting, Martin, Dr., 60323 Frankfurt (DE); Spruner von Mertz, Gert, Dipl.-Ing., 60528 Frankfurt (DE); Mildenberger, Werner, Dipl.-Ing., 63674 Altenstadt (DE)
(74) Vertreter: Erbacher, Alfons, Dipl.-Ing.

(57) **Zusammenfassung**

Ein mit einem Magnetvibrator (1) angetriebenes Vibrationsgerät weist üblicherweise ein Förderteil (2) auf, an welches - zwischen zwei Halterungswänden (14) - der Magnetvibrator (1) angebracht ist. Zum Schutz gegen grobe Verunreinigungen überdecken zwei gegenüberliegende Seitenwände (3') den Anker (8) und den Luftspalt (8a) zwischen Magnetkern und Anker (8) des Magnetvibrators (1). Mittels Befestigungsmitteln, die direkt in den Anker (8) oder in eine Halterung, in die der Anker (8) eingebettet ist, geführt sind, wird der Anker (8) unmittelbar an den Seitenwänden (3') montiert. Damit ist eine Befestigung des Magnetvibrators (1) realisierbar, die sich durch geringes Gewicht und einfache Realisierbarkeit auszeichnet, wobei gleichzeitig der Luftspalt (8a) gegen das Eindringen von Schmutz geschützt ist.

## Beschreibung

Die Erfindung betrifft ein Vibrationsgerät mit einem Magnetvibrator, der zumindest einen von mindestens einer stromdurchflossenen Spule umgebenen Magnetkern auf seiner Freiseite und mindestens einen relativ zum Magnetkern schwingfähigen Anker auf seiner Arbeitsseite aufweist, wobei zwischen Magnetkern und Anker ein Luftspalt vorhanden ist, und mit einem von dem Magnetvibrator in Bewegung versetzten Förderteil, wobei der Anker zwischen zwei mit dem Förderteil verbundenen, den Anker zumindest an den ihnen zugewandten Seiten überdeckenden und die Schwingungskräfte aufnehmenden und übertragenden Seitenwänden befestigt ist.

Ein derartiges Vibrationsgerät ist aus der DE-A-4 411 796 bekannt. Bei diesem Vibrationsgerät ist für den Luftspalt zwischen Magnetkern und Anker kein Schutz vorgesehen, er ist daher vollständig äußeren Einflüssen - insbesondere durch Verschmutzung - ausgesetzt.

Eine Befestigung eines Magnetvibrators zwischen zwei Seitenwänden ist aus der US-A-5 293 987 bekannt. Der Anker des dort beschriebenen Magnetvibrators ist mit einer Mittelplatte verbunden, welche an zwei mit einem Förderelement verbundenen Seitenwänden befestigt ist, und zwar senkrecht zu den Seitenwänden. An der Mittelplatte sind oben und unten Rahmenelemente angebracht, an welche gegenüberliegend zwei Abdeckplatten geschraubt sind. Zwischen den Rahmenelementen und den Abdeckplatten befindet sich elastisches Dichtungsmaterial. Die Abdeckplatten überdecken seitlich den Anker, den Luftspalt und den Magnetkern; sie haben in erster Linie eine Schutzfunktion für den Magnetvibrator, sie dienen nicht der Aufnahme und Übertragung der Schwingungskräfte des Magnetvibrators.

Aus dem Firmenpropekt "Syntron Electromagnetic Vibratory Feeders", Bulletin 141872, Seite 10 der FMC Corporation ist ebenfalls ein Vibrationsgerät mit einem Förderelement und einem Magnetvibrator bekannt. Der Magnetvibrator ist von einer eigenen Schutzhaube umgeben, die offensichtlich Magnetkern, Anker und das zugehörige Federsystem umgibt.

Der Magnetvibrator ist über eine eigene Fußkonstruktion an einem unterhalb des Förderelements befestigten Anbau angebracht. Der Anker befindet sich offensichtlich innerhalb des Gehäuses und nicht zwischen Seitenwänden des Anbaus. Da der Anbau die gesamten Schwingungskräfte aufnimmt und überträgt, muß er besonders stabil ausgeführt werden.

Mittels eines Magnetvibrators läßt sich ein Vibrationsgerät planmäßig in Schwingungen versetzen, dadurch ist es zum Austragen, Fördern, Beschicken, Dosieren, Mischen, Rütteln oder Sieben von Stück- und Schüttgütern verwendbar.

Der Erfindung liegt die Aufgabe zugrunde, ein Vibrationsgerät mit einem Magnetvibrator und einem Förderteil zur Verfügung zu stellen, bei dem der Magnetvibrator mit besonders einfachen Mitteln an dem Förderteil befestigt und dabei der Luftspalt zwischen Magnetkern und Anker nach außen gegen das Eindringen von groben Fremdkörpern geschützt ist.

Diese Aufgabe wird erfindungsgemäß dadurch gelöst, daß die Seitenwände zusätzlich den Luftspalt zumindest an den ihnen zugewandten Seiten überdecken.

Eine eigene Schutzhaube für den Magnetvibrator ist nicht zwingend erforderlich, weil die Seitenwände das Eindringen von Fremdstoffen in den Luftspalt erschweren. Außerdem übernehmen diese die Funktion einer optischen Abschirmung und erleichtern somit eine äußerlich ansprechende Gestaltung des gesamten Gerätes.
Gebräuchliche Vibrationsgeräte weisen zwei parallel unter dem Förderboden angeordnete Seitenwände auf, an denen der Antrieb angebracht ist.

Für die erfindungsgemäße Befestigung des Magnetvibrators werden folglich die üblicherweise bereits vorhandenen Bauteile genutzt, wobei auf eine Schutzhaube verzichtet werden kann. Da der Anker unmittelbar oder über ein Halteelement, an dem er direkt befestigt ist, an den Seitenwänden angebracht ist, wird keine eigene Fußkonstruktion für den Magnetvibrator benötigt. Dies führt zu einer Gewichtseinsparung auf der Arbeitsseite. Außerdem brauchen die Seitenwände nicht aufwendig mechanisch verstärkt zu werden, da die Schwingungskräfte direkt - und nicht über einen Vibratorfuß - von dem Anker in die Seitenwände geleitet werden.

Der erfindungsgemäße Vibrator kommt also (im Falle der Reduzierung auf das Wesentliche) mit lediglich drei (an sich bereits bekannten und üblichen) Grundbaueinheiten aus: dem Förderelement, den Seitenwänden und dem Anker.

Der Anker eines Magnetvibrators wird üblicherweise zur Verminderung ohmscher Verluste durch einen Stapel gegeneinander isolierter Bleche gebildet, die beispielsweise durch Hohlnuten dicht zusammen gehalten werden. Um zu vermeiden, daß in diesen Blechstapel Aufnehmungen (beispielsweise Gewinde) für Befestigungsmittel eingearbeitet werden müssen, ist es möglich, den Anker an einem Halteelement anzubringen und die Aufnehmungen in das Halteelement einzuarbeiten. Der Anker kann an das Haltelement, beispielsweise eine einfache Metallplatte, angeschweißt werden.
Das Halteelement ist also Bestandteil des Ankers, der eine der genannten Grundbaueinheiten bildet.

Wenn der Anker längs des Profilgrundes eines U-Profils angeordnet ist und die Seitenwände dieses U-Profils zusätzlich zu dem Anker den Luftspalt überdecken, kann der Anker in beliebiger Lage zu dem Förderteil angeordnet werden, wobei stets für eine gute Abschirmung des Luftspaltes gesorgt ist. Das U-Profil kann zusätzlich das Federsystem aufnehmen, mit dem Magnetkern und Anker gekoppelt sind.

Das U-Profil läßt sich unmittelbar, ohne zusätzliche Halteelemente, am Förderteil befestigen. Dies schafft den Vorteil einer Gewichtseinsparung bei den schwingenden Teilen.

Das U-Profil kann auch zwischen Halterungswänden befestigt werden, die üblicherweise senkrecht unter dem Förderteil angeordnet sind. Eine derartige Befestigung ist besonders einfach auszuführen.

Wenn die Höhe des gesamten Vibrationsgerätes mit einfachen Mitteln begrenzt werden soll, kann das U-Profil derart zwischen zwei gegenüberstehenden Halterungswänden befestigt werden, daß seine Stirnseiten die Halterungswände gegenüberliegend berühren. Durch Drehung um die Längsachse des U-Profils, kann die Einbaulage des Ankers (und damit des gegenüberliegenden Magnetkerns) so gewählt werden, daß die Höhe des gesamten Vibrationsgerätes verkleinert wird.

Die erwähnte Verringerung der Höhe des Vibrationsgerätes macht sich besonders im Falle eines U-förmigen Magnetkerns bemerkbar.

Bei einer Ausführungsform der zuvor erwähnten Anordnung überdecken die Halterungswände die ihnen zugewandten Seiten des Luftspaltes; dadurch ist der Luftspalt von allen Seiten nach außen abgeschirmt.

Besonders vorteilhaft ist es, wenn auf ein eigenes Gehäuse für den Magnetvibrator verzichtet wird. Dies reduziert das Gesamtgewicht und mindert den Energieverbrauch des Vibrationsgerätes.

Bei der Ausführungsform mit dem U-Profil, das den Anker seitlich umgibt, wird durch die Einbaulage des U-Profils zwischen den Halterungswänden die Schwingungsrichtung vorgegeben. Es ergibt sich eine andere Schwingungsrichtung, wenn das U-Profil, um seine Längsachse gedreht, in einer anderen Lage befestigt wird. So lassen sich lediglich durch Veränderung der Einbaulage unterschiedliche Schwingungsrichtugen, beispielsweise für eine Förderrinne, ein Förderrohr, ein (Rüttel-)Sieb oder einen Wendelförderer, realisieren.

Wenn Magnetkern und Anker derart übereinander angeordnet sind, daß sie im wesentlichen senkrecht zur Transportebene des Förderteils schwingen, ist eine Anordnung für einen Vibriertisch vorhanden.

Magnetkern und Anker lassen sich auch derart anordnen, daß sie parallel zur Transportebene gegeneinder schwingen. Damit wird eine Anordnung für eine Streuplatte geschaffen.

Das Federsystem, mit dem Magnetkern und Anker miteinander gekoppelt sind, kann eine Blattfeder oder ein Stapel von Blattfedern sein. Die Blattfedern können zusammen mit dem Anker zwischen den Seitenwänden - insbesondere auch zwischen den Seitenwänden des U-Profils - angeordnet sein. An Befestigungsmitteln an den Enden der Blattfedern läßt sich der Magnetkern anbringen. Der Anker ist dann zwischen den Balttfedern einerseits und dem Magnetkern andererseits angeordnet. Auf diese Weise sind mit einfachen Mitteln Blattfedern, Anker und Lufspalt seitlich abgeschirmt.

Im folgenden wird ein Ausführungsbeispiel der Erfindung anhand dreier Zeichnungen, aus denen sich weitere Einzelheiten und Vorteile ergeben, näher beschrieben.

Es zeigen:
- Fig. 1: eine seitliche Darstellung eines Vibrationsgerätes,
- Fig. 2: den Magnetvibrator des Vibrationsgerätes im Schnitt und
- Fig. 3: ein Vibrationsgerät, in dem der Magnetvibrator im Vergleich zu Fig. 1 um 90° gedreht befestigt ist.

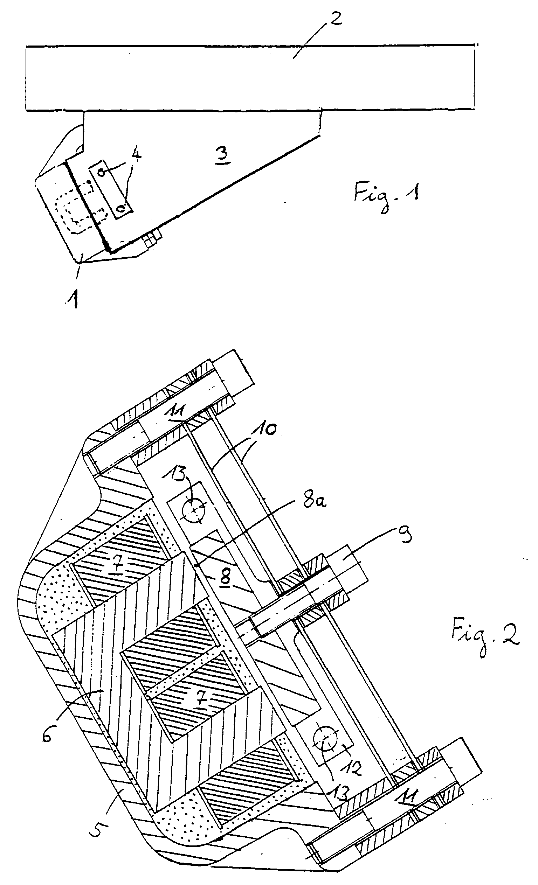

In Fig. 1 ist ein von einem Magnetvibrator 1 planmäßig in Schwingungen versetztes Vibrationsgerät mit einem Förderteil 2, das als Fördertrog ausgestaltet ist, zu sehen. An dem Förderteil 2 sind unten zwei parallel nebeneinander befestigte Seitenwände 3 angebracht, von denen in der Seitenansicht nur eine zu sehen ist, weil in dieser Darstellung die eine Seitenwand 3 die andere überdeckt. Der Magnetvibrator 1 ist zwischen den beiden Seitenwänden 3 (Halterungswände) eingebaut, wie im einzelnen weiter unten ausgeführt wird. Beide Seitenwände 3 haben die gleichen Abmessungen und sind mit Abstand zueinander nebeneinander angeordnet.

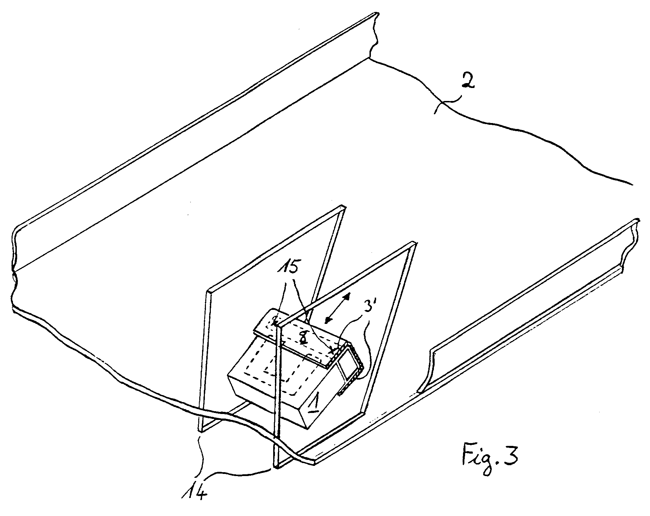

Der Magnetvibrator 1 weist einen von einer stromdurchflossenen Wicklung umgebenden Magnetkern und einen schwingfähig dazu angebrachten Anker auf. Der Anker ist in Längsrichtung parallel zwischen den Seitenwänden 3 befestigt.
Dazu sind in den Seitenwänden 3 zwei nebeneinander liegende Bohrungen 4 angebracht, durch die Schrauben geführt sind. Die Schrauben halten den Anker, wie weiter unten im Zusammenhang mit der Fig. 2 noch ausgeführt wird. Die beiden Seitenwände 3 sind so großflächig, daß sie seitlich einen zwischen Magnetkern und Anker befindlichen Luftspalt überdecken. Durch diese Ausgestaltung kann auf eine eigene Schutzhaube (Gehäuse) zum Schutze des Luftspaltes verzichtet werden. Durch gestrichelte Linien ist die Lage von Magnetkern (u-förmig) und Anker angedeutet.

Fig. 2 zeigt einen Längsschnitt durch den Magnetvibrator 1 gemäß Fig. 1, und zwar in der Lage, in der er in dem Vibrationsgerät nach Fig. 1 eingebaut ist. Unter einem Gehäuse 5 ist der Magnetkern 6 des Magnetvibrators in eine nichtleitende Masse eingegossen. Der Magnetkern 6 ist u-förmig ausgestaltet und weist an seinen beiden Schenkeln eine stromduchflossene Wicklung 7 auf.

Dem Magnetkern 6 gegenüber ist mit einem kleinen Abstand schwingfähig ein Anker 8 befestigt; zwischen Magnetkern 6 und Anker 8 befindet sich folglich ein Luftspalt 8a.

Der Anker 8 ist mit Schrauben 9 starr mit einem Blattfederstapel mit beliebiger Blattfederanzahl (die Ausführung nach Fig. 2 hat zwei Blattfedern 10) verbunden. Der Blattfederstapel ist an den beiden Enden über Bolzen an dem Gehäuse 5 des Magnetkerns 6 befestigt. Der Anker 8 ist eingebettet in ein längliches Halteelement 12, das in Längsrichtung des Ankers 8 an beiden Enden über den Anker 8 hinausragt. Das Halteelement 12 weist an seinen beiden Enden seitlich - quer zur Längsrichtung des Ankers 8 - an der Vorder- und an der Rückseite jeweils eine Gewindebohrung 13 auf. Es sind insgesamt vier Gewindebohrungen 13 vorhanden, von denen in der Fig. lediglich zwei dargestellt sind. Diese Gewindebohrungen 13 liegen bei eingebautem Magnetvibrator den Bohrungen 4 der Seitenwände 3 gegenüber. Die Gewindebohrungen 13 nehmen Schrauben auf, die von außen durch die Bohrungen 4 gemäß Fig. 1 eingeführt werden. Auf diese Weise läßt sich der Anker 8 zwischen den Seitenwänden 3 befestigen.
Die Seitenwände 3 überdecken seitlich nicht nur den Anker 8 und den Luftspalt 8a, sondern auch die Blattfedern 10. Die Seitenwände 3 ersetzen folglich eine eigene Schutzhaube.

Fig. 3 zeigt vereinfacht ein Vibrationsgerät mit einem Magnetvibrator, der - gegenüber dem in Fig. 1 um 90° gedreht - zwischen zwei unter einem Förderelement 2 befindlichen, parallel gegenüberliegend placierten Halterungswänden 14 angeordnet ist; die Halterungswände 14 haben im Vergleich zu den Seitenwänden 3 in Fig. 1 einen größeren Abstand zueinander. Bei dem dargestellten Ausführungsbeispiel ist der Anker 8 des Magnetvibrators nicht direkt an den Halterungswänden 14 befestigt, sondern an gegenüberliegenden Seitenwänden 3' eines U-Profils. Durch diese Seitenwände 3' sind jeweils zwei Schrauben 15 geführt, die - in Übereinstimmung mit der Darstellung in Fig. 2 - von dem Haltelement 12, in das der Anker 8 eingebettet ist, aufgenommen werden. Da die Halterungswände 14 direkt unter dem Förderteil 2 befestigt sind, ergibt sich eine geringere Einbauhöhe im Vergleich zu Fig. 1, insbesondere dann, wenn zusätzlich entsprechend kleinere Halterungswände 14 verwendet werden.

Das Förderteil 2 ist nur in einem Ausschnitt und dabei - ebenso wie die Halterungswände 14 - in Abweichung von einer üblichen technischen Realisierung durchsichtig dargestellt. Das Förderteil 2 ist als Förderrinne mit zwei Seitenwänden ausgebildet, die einen Transportboden an seinen beiden Längsseiten begrenzen.

Nicht dargestellt ist das Federsystem, mit dem der Magnetkern 6 und der Anker 8 miteinander gekoppelt sind. Das Federsystem kann so ausgebildet sein, wie es in Fig. 2 dargestellt ist. Für diesen Fall sind die Blattfedern zusammen mit dem Anker 8 zwischen den Seitenwänden 3' des U-Profils angeordnet.

## Patentansprüche

1. Vibrationsgerät mit einem Magnetvibrator (1), der zumindest einen von mindestens einer stromdurchflossenen Spule umgebenen Magnetkern (6) auf seiner Freiseite und mindestens einen relativ zum Magnetkern (6) schwingfähigen Anker (8) auf seiner Arbeitsseite aufweist, wobei zwischen Magnetkern (6) und Anker (8) ein Luftspalt (8a) vorhanden ist, und mit einem von dem Magnetvibrator (1) in Bewegung versetzten Förderteil, wobei der Anker (8) zwischen zwei mit dem Förderteil verbundenen, den Anker (8) zumindest an den ihnen zugewandten Seiten überdeckenden und die Schwingungskräfte aufnehmenden und übertragenden Seitenwänden (3, 3') befestigt ist, **dadurch gekennzeichnet,**
daß die Seitenwände (3, 3') zusätzlich den Luftspalt (8a) zumindest an den ihnen zugewandten Seiten überdecken.

2. Vibrationsgerät nach einem der Anspruch 1,
dadurch gekennzeichnet,
daß die Seitenwände (3') Seitenwände eines U-Profils sind und daß der Anker (8) längs des Profilgrundes angeordnet ist (Fig. 3).

3. Vibrationsgerät nach Anspruch 2,
dadurch gekennzeichnet,
daß das U-Profil unmittelbar am Förderteil (2) befestigt ist.

4. Vibrationsgerät nach Anspruch 2,
dadurch gekennzeichnet,
daß das U-Profil zwischen zwei Halterungswänden (14) befestigt ist, die mit dem Förderteil (2) verbunden sind (Fig. 3).

5. Vibrationsgerät nach Anspruch 4,
dadurch gekennzeichnet,
daß die beiden Halterungswände (14) parallel zueinander ausgerichtet sind und die beiden Stirnseiten des U-Profils gegenüberliegend berühren (Fig. 3).

6. Vibrationsgerät nach Anspruch 5,
dadurch gekennzeichnet,
daß die Halterungswände (14) die ihnen zugewandten Seiten des Luftspaltes (8a) überdecken (Fig. 3).

7. Vibrationsgerät nach einem der vorangehenden Ansprüche,
dadurch gekennzeichnet,
daß der Magnetvibrator (1) keine Schutzhaube aufweist.

8. Vibrationsgerät nach einem der vorangehenden Ansprüche,
dadurch gekennzeichnet,
daß Magnetkern (6) und Anker (8) derart übereinander angeordnet sind, daß sie zumindestens annähernd senkrecht zur Transportebene des Förderteils (2) gegeneinander schwingen.

9. Vibrationsgerät nach einem der Ansprüche 1 bis 7,
dadurch gekennzeichnet,
daß Magnetkern (6) und Anker (8) derart nebeneinander angeordnet sind, daß sie zumindestens annähernd parallel zur Transportebene des Förderteils (2) gegeneinander schwingen.

10. Vibrationsgerät nach einem der vorangehenden Ansprüche,
dadurch gekennzeichnet,
daß das Magnetkern (6) und Anker (8) koppelnde Federsystem eine Blattfeder 10 oder ein Blattfederstapel ist, daß die Blattfeder(n) an ihren Enden über Befestigungsmittel an der Freiseite des Magnetvibrators angebracht sind und daß der Anker (8) an der Blattfeder (10) bzw. dem Blattfederstapel mit Abstand zu den vorgenannten Befestigungsmitteln befestigt ist, und zwar in einer Position zwischen dem Magnetkern (6) und der Blattfeder 10 bzw. dem Blattfederstapel, und daß die oder jede Blattfeder (10) zwischen den Seitenwänden (3, 3') angeordnet ist.
